# EUROPÄISCHE PATENTANMELDUNG

(11) **EP 2 236 945 A2**
(43) Veröffentlichungstag der Anmeldung: **06.10.2010**
(21) Anmeldenummer: 10002438.9
(22) Anmeldetag: 09.03.2010
(51) Int. Cl.: F24D 3/18

(54) **Verfahren und Nutzung von Verdichtungswärme**

(30) Priorität: 17.03.2009 DE 102009013755
(71) Anmelder: Linde Aktiengesellschaft, 80331 München (DE)
(72) Erfinder: Adler, Robert, 2201 Gerasdorf (AT); Dorner, Sascha, 1210 Wien (AT); Klein, Ekkehardt, 3425 Langenlebarn (AT)
(74) Vertreter: Zahn, Christoph

(57) **Zusammenfassung**

Es wird ein Verfahren zur Nutzung der bei einem Verdichtungsprozess anfallenden Verdichtungswärme zur Klimatisierung und/oder Beheizung von Gebäuden und/oder zur Erwärmung von Brauchwasser beschrieben.

Erfindungsgemäß wird die bei dem Verdichtungsprozess (V1, V2) anfallende Verdichtungswärme mittels wenigstens eines Kältemittelkreislaufes (2 - 5) zumindest zeitweilig an wenigstens einen Verbraucher (E3), der der Klimatisierung und/oder Beheizung eines Gebäudes und/oder der Erwärmung von Brauchwasser dient, abgegeben.

## Beschreibung

Die Erfindung betrifft ein Verfahren zur Nutzung der bei einem Verdichtungsprozess anfallenden Verdichtungswärme.

Zum Beheizen und Klimatisieren von Gebäuden sowie zum Erwärmen von Brauchwasser wird Energie benötigt und ist daher bereitzustellen und/oder unmittelbar vor Ort zu erzeugen. Um den erforderlichen Energiebedarf verringern zu können, wird bereits bei einer Vielzahl von Anwendungsfällen überschüssige Energie für die vorgenannten Verwendungszwecke genutzt. Bei einer Vielzahl von Anwendungsfällen jedoch wird einerseits Energie zum Heizen oder Kühlen von Gebäuden benötigt, während andererseits Energie ungenutzt vernichtet wird bzw. werden muss, da sie bisher nicht "wiederverwertet" werden kann.

Bei Erdgas- sowie Wasserstoff-Tankstellen existieren eine Vielzahl von Gebäuden, die zumindest zeitweilig beheizt oder gekühlt werden müssen. Ist an derartigen Tankstellen darüber hinaus eine Fahrzeug-Waschanlage vorgesehen, muss zusätzlich das für sie erforderliche Brauchwasser erwärmt werden. Erdgas bzw. Wasserstoff, das bzw. der in einer derartigen Tankstelle bereitgestellt wird, muss vor der Betankung eines Fahrzeuges komprimiert werden. Die bei der Komprimierung dieser Medien freiwerdende Verdichtungsenergie wird bisher mittels eines geeigneten Kühlsystems - hierbei kommen als Kühlmedien Wasser oder Umgebungsluft zum Einsatz - ungenutzt vernichtet. Die Komprimierung der vorgenannten Medien auf Drücke bis 1000 bar erfordert einen Energieaufwand von 15 bis 300 kW, der im gleichen Umfang als Wärme entsteht und bisher über entsprechende Wärmetauscher an die Umgebung abgegeben wird.

Aufgabe der vorliegenden Erfindung ist es, ein gattungsgemäßes Verfahren zur Nutzung der bei einem Verdichtungsprozess anfallenden Verdichtungswärme anzugeben, das die vorbeschriebenen Nachteile vermeidet und es insbesondere ermöglicht, die bei einem Verdichtungsprozess anfallende Verdichtungswärme zur Klimatisierung von Gebäuden, zur Beheizung von Gebäuden und/oder zur Erwärmung von Brauchwasser zu nutzen.

Zur Lösung dieser Aufgabe wird ein gattungsgemäßes Verfahren zur Nutzung der bei einem Verdichtungsprozess anfallenden Verdichtungswärme vorgeschlagen, das dadurch gekennzeichnet ist, dass die bei dem Verdichtungsprozess anfallende Verdichtungswärme mittels wenigstens eines Kältemittelkreislaufes zumindest zeitweilig an wenigstens einen Verbraucher, der der Klimatisierung und/oder Beheizung eines Gebäudes und/oder der Erwärmung von Brauchwasser dient, abgegeben wird.

Weitere vorteilhafte Ausgestaltungen des erfindungsgemäßen Verfahrens zur Nutzung der bei einem Verdichtungsprozess anfallenden Verdichtungswärme, die Gegenstände der abhängigen Patentansprüche darstellen, sind **dadurch gekennzeichnet, dass**
- das erfindungsgemäße Verfahren in einer Gasbetankungsanlage, die eine ein- oder mehrstufige Verdichtung eines Mediums, vorzugsweise Erdgas oder Wasserstoff, beinhaltet, realisiert wird, und
- das in dem Kältemittelkreislauf zirkulierende Medium Wasser und/oder Glykol ist.

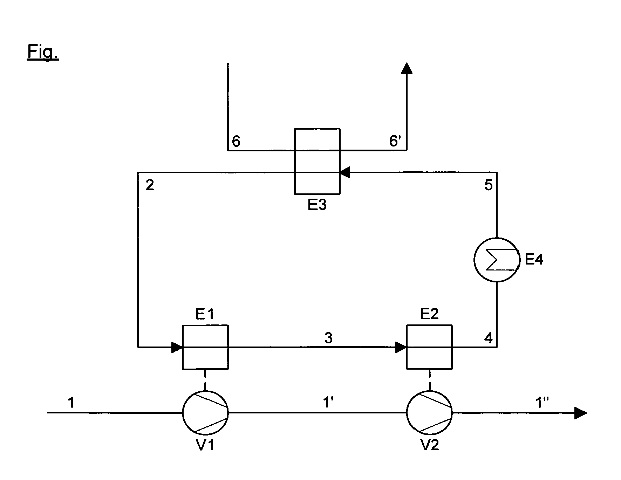

Das erfindungsgemäße Verfahren zur Nutzung der bei einem Verdichtungsprozess anfallenden Verdichtungswärme zur Klimatisierung von Gebäuden, zur Beheizung von Gebäuden und/oder zur Erwärmung von Brauchwasser sowie weitere Ausgestaltungen desselben seien nachfolgend anhand des in der Figur dargestellten Ausführungsbeispieles näher erläutert. Die Figur zeigt jedoch lediglich eine schematisierte Darstellung des erfindungsgemäßen Verfahrens.

Über Leitung 1 wird ein zu komprimierendes, gasförmiges Medium einem Vorverdichter V1 zugeführt und in diesem auf einen gewünschten Zwischendruck verdichtet. Im Falle einer Erdgas- oder Wasserstoff-Tankstelle liegt dieser Zwischendruck im Bereich von 12 bis 27 bar. Das vorverdichtete Medium kann entweder in einer in der Figur nicht dargestellten Speichervorrichtung zwischengespeichert werden und/oder über Leitung 1' unmittelbar dem Hauptverdichter V2 zugeführt werden. In diesem erfolgt eine Verdichtung auf den gewünschten Enddruck. Dieser liegt im Falle der Verdichtung von Erdgas oder Wasserstoff im Regelfall bei einem Druck zwischen 250 und 1000 bar.

Über die Leitung 1" wird das verdichtete Medium anschließend - ggf. nach einer Zwischenspeicherung - einem zu betankenden Fahrzeug zugeführt. Die Verdichtung des zu komprimierenden, gasförmigen Mediums kann auch lediglich in einer oder mehr als zwei Verdichtungsstufen erfolgen.

Sowohl dem Vorverdichter V1 als auch dem Hauptverdichter V2 sind ein Wärmetauscher E1 bzw. E2 zugeordnet - dargestellt durch die gestrichelt gezeichneten den jeweiligen Verdichter und zugeordneten Wärmetauscher verbindenden Leitungen. Die Wärmetauscher E1/E2 dienen der Abführung der bei der Verdichtung in den beiden Verdichtungsstufen V1/V2 entstehenden Verdichtungswärme. Üblicherweise erfolgt pro Verdichtungsstufe eine Temperaturerhöhung von 50 bis 150 K.

Die beiden Wärmetauscher E1 und E2 sind über einen Kältemittelkreislauf 2 - 5 verbunden. In diesem Kältemittelkreislauf zirkuliert ein für den jeweiligen Anwendungszweck geeignetes Kältemittel, wobei es sich grundsätzlich um ein ein- oder mehrkomponentiges Kältemittel handeln kann. Bei einer Vielzahl von Anwendungsfällen wird es ausreichen bzw. zweckmäßig sein, Wasser als Kältemittel zu verwenden.

Lediglich beispielhaft ist ein Verbraucher E3 dargestellt, dem über Leitung 6 ein Medium zugeführt und über Leitung 6' ein Medium, das in ihm erwärmt oder abgekühlt wird, abgeführt wird. Bei dem Verbraucher E3 kann es sich beispielsweise um eine Heizung, eine Klimaanlage oder eine Vorrichtung zur Erwärmung von Brauchwasser, vorzugsweise in Form einer Adsorptions-, Absorptions- oder DEC-Anlage (Dessicant and Evaporative Cooling), handeln. In diesem Falle wäre das dem Verbraucher E3 über Leitung 6 zugeführte Medium Luft bzw. Brauchwasser. Bei einer Vielzahl von Anwendungsfällen werden mehrere Verbraucher vorgesehen sein, die jedoch nicht zwangsläufig immer zeitgleich in Betrieb sein müssen.

In vorteilhafter Weise ist ein weiterer Wärmetauscher E4 vorzusehen, über den die bei der Verdichtung frei werdende Energie dann abgebaut bzw. abgeführt werden kann - beispielsweise durch Wärmeabgabe an Kühlwasser oder Umgebungsluft -, wenn eine "Energieaufnahme" durch den oder zumindest einen von mehreren Verbrauchern E3 nicht möglich oder gewünscht ist.

Das erfindungsgemäße Verfahren zur Nutzung der bei einem Verdichtungsprozess anfallenden Verdichtungswärme ermöglicht es nunmehr, die bzw. den Großteil der für die Beheizung oder Klimatisierung von Gebäuden erforderliche Energie kostengünstig bereit zu stellen.

Das erfindungsgemäße Verfahren zur Nutzung der bei einem Verdichtungsprozess anfallenden Verdichtungswärme lässt sich bei bestehenden Prozessen bzw. Anlagen, die einen Verdichtungsprozess aufweisen, mit einem vergleichsweise geringen Aufwand nachrüsten.

## Patentansprüche

1. Verfahren zur Nutzung der bei einem Verdichtungsprozess anfallenden Verdichtungswärme zur Klimatisierung und/oder Beheizung von Gebäuden und/oder zur Erwärmung von Brauchwasser, **dadurch gekennzeichnet, dass** die bei dem Verdichtungsprozess (V1, V2) anfallende Verdichtungswärme mittels wenigstens eines Kältemittelkreislaufes (2 - 5) zumindest zeitweilig an wenigstrens einen Verbraucher (E3), der der Klimatisierung und/oder Beheizung eines Gebäudes und/oder der Erwärmung von Brauchwasser dient, abgegeben wird.

2. Verfahren nach Anspruch 1, wobei das Verfahren in einer Gasbetankungsanlage, die eine ein- oder mehrstufige Verdichtung (V1, V2) eines Mediums, vorzugsweise Erdgas oder Wasserstoff, beinhaltet, realisiert wird.

3. Verfahren nach Anspruch 1 oder 2, **dadurch gekennzeichnet, dass** das in dem Kältemittelkreislauf (2 - 5) zirkulierende Medium Wasser und/oder Glykol ist.
